(19) **Europäisches Patentamt / European Patent Office / Office européen des brevets**

(11) **EP 4 576 248 A1**

(12) **EUROPEAN PATENT APPLICATION**
published in accordance with Art. 153(4) EPC

(43) Date of publication:
**25.06.2025  Bulletin 2025/26**

(21) Application number: **24836247.7**

(22) Date of filing: **26.06.2024**

(51) International Patent Classification (IPC):
*H01M 4/136* [(2010.01)]    *H01M 4/131* [(2010.01)]
*H01M 4/62* [(2006.01)]    *H01M 4/58* [(2010.01)]
*H01M 4/525* [(2010.01)]    *H01M 4/505* [(2010.01)]
*H01M 10/052* [(2010.01)]    *H01M 4/36* [(2006.01)]
*H01M 4/02* [(2006.01)]

(52) Cooperative Patent Classification (CPC):
Y02E 60/10

(86) International application number:
**PCT/KR2024/008859**

(87) International publication number:
**WO 2025/009799 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **06.07.2023  KR 20230087746**
**13.05.2024  KR 20240062275**

(71) Applicant: **LG Energy Solution, Ltd.**
**Seoul 07335 (KR)**

(72) Inventors:
• **YU, Hyun Jin**
**Daejeon 34122 (KR)**
• **KIM, Ji Eun**
**Daejeon 34122 (KR)**
• **KIM, Shul Kee**
**Daejeon 34122 (KR)**
• **YOO, Kwang Ho**
**Daejeon 34122 (KR)**
• **JUNG, Kyung Hwan**
**Daejeon 34122 (KR)**
• **JUNG, Byoung Hyo**
**Daejeon 34122 (KR)**
• **NA, Ho Young**
**Daejeon 34122 (KR)**

(74) Representative: **Hoffmann Eitle**
**Patent- und Rechtsanwälte PartmbB**
**Arabellastraße 30**
**81925 München (DE)**

(54) **ELECTRODE COMPRISING ACTIVE MATERIAL LAYER HAVING DOUBLE-LAYERED STRUCTURE, AND SECONDARY BATTERY COMPRISING SAME**

(57)    An electrode for a secondary battery comprises: a current collector; a lower active material layer formed on at least one side of the current collector; and an upper active material layer formed on the lower active material layer. The lower active material layer comprises a first lithium iron phosphate active material, a lithium nickel oxide active material, and a needle-type conductive material. The upper active material layer comprises a second lithium iron phosphate active material and sphere-type conductive material. A ratio of a content of a sum of the first lithium iron phosphate material and the second lithium iron phosphate active material to a content of the lithium nickel oxide active material is in a weight ratio range of from 55 to 70:30 to 45. A total average loading amount of the upper and lower active material layers is in a range of from 300 mg/25cm$^2$ to 900 mg/25cm$^2$.

[FIG. 5]

## Description

[Technical Field]

This application claims the benefit of priority based on Korean Patent Application No. 10-2023-0087746, filed on July 06, 2023 and Korean Patent Application No. 10-2024-0062275, filed on May 13, 2024, and the entire contents of the Korean patent applications are incorporated herein by reference.

The present disclosure relates to an electrode of double layer structures and a secondary battery including the same, and more particularly, the electrode includes different types of active materials.

[Background Art]

Lithium secondary batteries are used as an energy source for a wide variety of electronic devices, and as technology develops, there is a growing need for batteries that can express more capacity in the same space or design compared to conventional batteries.

Lithium transition metal complex oxides are used as a positive electrode active material for such lithium secondary batteries. Conventionally, active materials of lithium nickel oxide group with high operating voltage and excellent capacity characteristics have been continuously researched. However, active materials of lithium nickel oxide group have a limitation of low thermal stability.

As one of the alternative methods, research is being conducted on the technology of applying lithium iron phosphate as a positive electrode active material. However, active materials of lithium iron phosphate group have problems such as not having high adhesion to a current collector and low-capacity characteristics.

Therefore, it is necessary to develop a new technology that uses lithium iron phosphate oxide to improve thermal stability while preserving the characteristics of lithium nickel oxide active materials.

## SUMMARY

[Technical Problem]

Accordingly, the present disclosure is directed to provide an electrode for a secondary battery that maintains the capacity characteristics of a lithium nickel oxide active material and enhances thermal stability by using a lithium iron phosphate active material, and a secondary battery applied thereto.

[Technical Solution]

To solve the above-described problem, in one embodiment, an electrode for a secondary battery according to the present disclosure includes a current collector; a lower active material layer formed on one side or both sides of the current collector, including a first lithium iron phosphate active material (F1) and a lithium nickel oxide active material (N) as active materials, and including a needle-type conductive material as a conductive material; and an upper active material layer formed on the lower active material layer, including a second lithium iron phosphate active material (F2) as an active material, and including a sphere-type conductive material as a conductive material. In one example, the ratio of the content of the sum of the first and second lithium iron phosphate active materials (F1+F2) and the content of the lithium nickel oxide active material (N) is in a weight ratio range of 55 to 70:30 to 45. In addition, the total loading amount of the lower and upper active material layers is in the range of 300 mg/25cm$^2$ to 900 mg/25cm$^2$ on average.

In one embodiment, the upper active material layer uses a sphere-type conductive material as the conductive material alone or uses 90 wt.% or more of a sphere-type conductive material and the remainder of a needle-type conductive material. In this case, the lower active material layer may use a needle-type conductive material as the conductive material alone, or a mixture of sphere-type and needle-type conductive materials.

In another embodiment, the upper active material layer uses a sphere-type conductive material as a conductive material alone or uses 90 wt.% or more of a sphere-type conductive material and the remainder of a needle-type conductive material. Additionally, the lower active material layer uses a mixture of sphere-type conductive material and needle-type conductive material as the conductive material in a weight ratio of 30 to 60:40 to 70.

In another embodiment, the total loading amount of the lower and upper active material layers is in the range of 400 mg/25cm$^2$ to 700 mg/25cm$^2$ on average. In addition, the electrode for secondary battery according to the present disclosure satisfies that the value calculated by the following condition 1 is 0.45 or less.

[Condition 1].

$$D_{Top}/D_{Bottom}$$

wherein $D_{Top}$ indicates the average loading amount (mg/25cm$^2$) of the upper active material layer,
wherein $D_{Bottom}$ indicates an average loading amount (mg/25cm$^2$) of the lower active material layer.

In one example, the loading amount of the lower active material layer is in the range of 300 mg/25cm$^2$ to 450 mg/25cm$^2$ on average.

In another example, the ratio (F1:F2) of the content of the first lithium iron phosphate active material (F1) in the lower active material layer to the content of the second lithium iron phosphate active material (F2) in the upper active material layer is in the weight ratio range of 40 to 60:40 to 60.

In another example, in the lower active material layer, the ratio (F1:N) of the content of the first lithium iron phosphate active material (F1) to the content of the lithium nickel oxide active material (N) is in the weight ratio range of 35 to 48:52 to 65.

In a specific example, the total porosity of the lower and upper active material layers is in the range of 22% to 28% (V/V) on average. The porosity is calculated based on volume.

In one example, the first and second lithium iron phosphate active materials (F1, F2) are each independently represented by the following chemical formula 1.

[Chemical formula 1]     $Li_{1+a}Fe_{1-b}M^1_bPO_{4-c}X_c$

wherein $M^1$ includes any one or two or more elements selected from the group consisting of Al, Mg, Ni, Co, Mn, Ti, Ga, Cu, V, Nb, Zr, Ce, In, Zn, and Y,
wherein X includes any one or two or more elements selected from the group consisting of F, S and N,
wherein a, b, and c are in the range of $-0.5 \leq a \leq 0.5$, $0 \leq b \leq 0.9$, and $0 \leq c \leq 0.8$, respectively.

For example, the first and second lithium iron phosphate active materials (F1, F2) each independently include a carbon coating layer.

In another example, the lithium nickel oxide active material (N) is represented by the following chemical formula 2.

[Chemical formula 2]     $Li_pNi_{1-q-r-s}Co_qMn_rM^2_sO_2$

wherein $M^2$ is any one or more elements selected from the group consisting of Al, Zr, Ti, Mg, Ta, Nb, Mo, and Cr, and $0.9 \leq p \leq 1.5$, $0 \leq q \leq 1$, $0 \leq r \leq 0.5$, $0 \leq s \leq 0.1$, and $0 \leq q+r+s \leq 1$.

For example, in the chemical formula 2, 1-q-r-s is in the range of 0.2 to 0.95.

The present disclosure also provides a secondary battery including the electrode for secondary battery described above. Specifically, the electrode is adaptable as a positive electrode. In one embodiment, the secondary battery is a structure comprising a positive electrode; a separator; and a negative electrode. The separator may be disposed between the positive electrode and the negative electrode.

In one example, the secondary battery is a pouch-type battery.

In another example, the secondary battery is a cylindrical or prismatic battery.

In another example, the secondary battery is a battery for an automotive or Energy Storage System (ESS).

[Advantageous Effects]

An electrode for a secondary battery according to the present disclosure has the advantage of realizing excellent thermal stability while maintaining high-capacity characteristics.

**BRIEF DESCRIPTION OF THE DRAWINGS**

FIG. 1 and FIG.2 are a cross-sectional view and an enlarged view thereof of an electrode manufactured according to one example of the present disclosure.
FIG. 3 and FIG. 4 are a cross-sectional view and an enlarged view thereof of an electrode manufactured according to a comparative example.

FIG. 5 is a graph showing the results of calculating the shut down speed (TP speed) for secondary batteries having electrodes applied according to an example and a comparative example, respectively.

FIG. 6 is a graph showing the capacity retention rate according to the number of cycles for secondary batteries having electrodes applied according to examples and comparative examples, respectively.

FIG. 7 is a graph showing the results of evaluating high temperature storage characteristics for secondary batteries having electrodes applied according to an example and a comparative example, respectively.

FIG. 8 is a graph showing the result of evaluating the battery resistance by SOC for the secondary batteries having electrodes applied according to an example and comparative examples, respectively.

FIG. 9 is a graph showing the results of evaluating adhesion for electrodes according to an example and comparative examples.

FIG. 10 is a graph showing the results of evaluating resistance for electrodes according to an example and comparative examples.

## DETAILED DESCRIPTION

The present disclosure may have various modifications and various aspects, and thus specific aspects thereof will be described in detail below.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

Hereinafter, the present disclosure is described in more detail.

In one embodiment, an electrode for lithium secondary battery according to the present disclosure includes a current collector; a lower active material layer formed on one side or both sides of the current collector, including a first lithium iron phosphate active material (F1) and a lithium nickel oxide active material (N) as active materials, and including a needle-type conductive material as a conductive material; and an upper active material layer formed on the lower active material layer, including a second lithium iron phosphate active material (F2) as an active material, and including a sphere-type conductive material as a conductive material. The electrode for secondary battery according to the present disclosure is a double layer structures comprising a lower and an upper active material layer. The lower active material layer includes a mixed active material including a first lithium iron phosphate active material (F1) and a lithium nickel oxide active material (N). The upper active material layer includes a second lithium iron phosphate active material (F2) as an active material alone. Further, the lower active material layer includes a needle-type conductive material, and the upper active material layer includes a sphere-type conductive material.

Specifically, the ratio of the sum content of the first and second lithium iron phosphate active materials (F1+F2) and the content of the lithium nickel oxide active material (N) is in the weight ratio range of 55 to 70:30 to 45. For example, the content ratio is in the weight ratio range of 55 to 65:35 to 45. In the electrode for lithium secondary battery according to the present disclosure, the proportion of lithium iron phosphate active material is controlled to be high based on the overall active material layer. In the present disclosure, by controlling the content of the lithium iron phosphate active material (F1+F2) to be higher than the content of the lithium nickel oxide (N), excellent thermal stability can be realized.

In addition, the total loading amount of the lower and upper active material layers is in the range of 300 mg/25cm$^2$ to 900 mg/25cm$^2$ on average. Specifically, the loading amount is in the range of 400 mg/25cm$^2$ to 700 mg/25cm$^2$ or in the range of 500 mg/25cm$^2$ to 600 mg/25cm$^2$. The electrode for a secondary battery according to the present disclosure may have double layer structures, thereby realizing a high loading amount. For example, the electrode may be manufactured using a double slot die (DLD). By manufacturing the electrodes with double layer structures using a DLD, high loading amounts can be realized, interfacial property between the upper and lower layers can be improved, and the process can be simplified.

The electrode for a secondary battery according to the present disclosure is characterized by having different conductive materials applied to the upper and lower active material layers. The lower active material layer includes a needle-type conductive material, and it is also possible to use a mixture of needle-type and sphere-type conductive materials. The lower active material layer includes a needle-type conductive material, which can improve the conductivity between the active materials and minimize the conductive material content. In this regard, the upper active material layer includes a sphere-type conductive material. The upper active material layer includes a lithium iron phosphate active material as an active material. More specifically, the upper active material layer includes a lithium iron phosphate active material alone as the active material. The lithium iron phosphate active material has an average particle diameter in the range of 0.5 μm to 2 μm, more specifically in the range of 0.5 μm to 1.2 μm, or in the range of 0.6 μm to 0.8 μm. The lithium iron phosphate active material has the small particle diameter range, so a needle-type conductive material is not suitable. Specifically, even if a needle-type conductive material is used in an upper active material layer including lithium iron phosphate particles with a small particle diameter as an active material alone, the area where the lithium iron phosphate particles with a small particle diameter and the needle-type conductive material meet each other may be smaller than when a sphere-type conductive material with a small particle diameter is mixed with the lithium iron phosphate particles with a small particle diameter. Accordingly, mixing the sphere-type conductive material with the lithium iron phosphate particles may be advantageous in terms of improving conductivity.

In the present disclosure, by introducing a sphere-type conductive material into an upper active material layer using a lithium iron phosphate active material as an active material alone, the electrical conductivity of the active material can be improved. These results are demonstrated in the following experimental examples.

In one specific embodiment, the upper active material layer uses a sphere-type conductive material as the conductive material alone or uses 90 wt.% or more of a sphere-type conductive material and the remainder of a needle-type conductive material. In this case, the lower active material layer may use a needle-type conductive material as the conductive material alone, or a mixture of sphere-type and needle-type conductive materials.

In another specific embodiment, the upper active material layer uses a sphere-type conductive material as the conductive material alone or uses at 90 wt.% or more of a sphere-type conductive material and the remainder of a needle-type conductive material. Also, the lower active material layer uses a mixture of sphere-type conductive material and needle-type conductive material in a weight ratio of 30 to 60:40 to 70 as the conductive material. By including a certain amount of the sphere-type conductive material, the lower active material layer can increase durability for rolling.

In one embodiment, the total loading amount of the lower and upper active material layers is in the range of 400 mg/25cm$^2$ to 700mg/25cm$^2$ on average. In addition, the electrode for a secondary battery according to the present disclosure satisfies that the value calculated by the following condition 1 is 0.45 or less.

[Condition 1].

$$D_{Top}/D_{Bottom}$$

wherein $D_{Top}$ indicates the average loading amount (mg/25cm$^2$) of the upper active material layer,
wherein $D_{Bottom}$ indicates an average loading amount (mg/25cm$^2$) of the lower active material layer.

The condition 1 refers to a loading amount ratio between the upper and lower active material layers. Specifically, the loading amount ratio according to the condition 1 may be in the range of 0.1 to 0.45, in the range of 0.3 to 0.45, or in the range of 0.4 to 0.45. The present disclosure can maintain the capacity characteristics of the lithium nickel oxide active material by controlling the loading amount of the lower active material layer relatively high.

In one example, the loading amount of the lower active material layer is in the range of 300 mg/25cm$^2$ to 450 mg/25cm$^2$ on average. For example, the loading amount of said lower active material layer averages in the range of 300 mg/25cm$^2$ to 400 mg/25cm$^2$, in the range of 350 mg/25cm$^2$ to 450mg/25cm$^2$, or in the range of 350 mg/25cm$^2$ to 400 mg/25cm$^2$. The present disclosure controls the loading amount of the lower active material layer relatively higher compared to the loading amount of the upper active material layer.

In another example, the ratio (F1:F2) of the content of the first lithium iron phosphate active material (F1) of the lower active material layer to the content of the second lithium iron phosphate active material (F2) of the upper active material layer is in the weight ratio range of 40 to 60:40 to 60. For example, the ratio (F1:F2) is in the weight ratio range of 40 to 50:50 to 60, in the weight ratio range of 45 to 60:40 to 55, or in the weight ratio range of 45 to 55:45 to 55. In the present disclosure, the content of lithium iron phosphate active material included in the lower and upper active material layers, respectively, is controlled at an equivalent level. Accordingly, the electrode for a secondary battery according to an aspect of the present disclosure can realize uniform thermal stability of the upper and lower active material layers.

In another example, in the lower active material layer, the ratio (F1:N) of the content of the first lithium iron phosphate active material (F1) to the content of the lithium nickel oxide active material (N) is in the weight ratio range of 35 to 48:52 to 65. For example, the ratio (F1:N) is in the weight ratio range of 35 to 45:55 to 65, in the weight ratio range of 40 to 48:52 to 60, or in the weight ratio range of 40 to 45:55 to 65. In the lower active material layer, the content of the lithium nickel oxide active material (N) can be controlled to be higher than the content of the first lithium iron phosphate active material (F1). In the present disclosure, the lower active material layer is a structure in which the first lithium iron phosphate active material is dispersed in a lithium nickel oxide matrix. Thus, the lower active material layer is more strongly characterized as lithium nickel oxide. In an electrode for a secondary battery according to an aspect of the present disclosure, the lower active material layer realizes the characteristics of a lithium nickel oxide active material and the upper active material layer realizes the characteristics of a lithium iron phosphate active material. The lower active material layer contributes to further increasing the capacity of the electrode, and the upper active material layer contributes to further increasing the thermal stability of the electrode.

In the present disclosure, the total porosity of the lower and upper active material layers is in the range of 22% to 28% (V/V) on average. The porosity is, for example, in the range of 24% to 26% (V/V) on average. The present disclosure provides a low porosity by performing rolling at a high pressure. The present disclosure applies a sphere-type conductive material to the upper active material layer, thereby minimizing the degradation of electrical conductivity even when rolling is performed at high pressure.

In one embodiment, the first and second lithium iron phosphate active materials (F1, F2) are each independently represented by the following chemical formula 1.

[Chemical formula 1] $\qquad$ $Li_{1+a}Fe_{1-b}M^1{}_bPO_{4-c}X_c$

wherein $M^1$ includes any one or two or more elements selected from the group consisting of Al, Mg, Ni, Co, Mn, Ti, Ga, Cu, V, Nb, Zr, Ce, In, Zn, and Y,
wherein X includes any one or two or more elements selected from the group consisting of F, S and N,
wherein a, b, and c are in the range of $-0.5 \le a \le 0.5$, $0 \le b \le 0.9$, and $0 \le c \le 0.8$, respectively.

In the chemical formula 1, for example, b is in the range of 0 to 0.7, 0.1 to 0.9, 0.3 to 0.9, 0.3 to 0.7, or 0.5 to 0.9. In one example, in the chemical formula 1, b is in the range of 0.61 to 0.85, which can increase the operating voltage range of the electrode.

In a specific example, the active material according to the chemical formula 1 is one or more of $Li_{1+a}FePO_4$ ($-0.3 \le a \le 0.3$) and $Li_{1+a}Fe_{1-b}Mn_bPO_4$($-0.3 \le a \le 0.3$, $0.3 \le b \le 0.9$). For example, the active material according to the chemical formula 1 is one or more of $LiFePO_4$, $LiFe_{0.7}Mn_{0.3}PO_4$, $LiFe_{0.5}Mn_{0.5}PO_4$, and $LiFe_{0.3}Mn_{0.7}PO_4$.

In another example, the active material according to the chemical formula 1 may be a carbon (C) coated structure. By carbon coating, the electrical conductivity of the active material according to chemical formula 1 can be increased.

In another example, the lithium nickel oxide active material (N) is represented by the following chemical formula 2.

[Chemical formula 2] $\qquad$ $Li_pNi_{1-q-r-s}Co_qMn_rM^2{}_sO_2$

wherein $M^2$ is any one or more elements selected from the group consisting of Al, Zr, Ti, Mg, Ta, Nb, Mo, and Cr, and $0.9 \le p \le 1.5$, $0 \le q \le 1$, $0 \le r \le 0.5$, $0 \le s \le 0.1$, and $0 \le q+r+s \le 1$.

Specifically, the active material according to the chemical formula 2 may be represented as $Li_p(Ni_{1-q-r}Co_qMn_r)O_4$ ($0.5 < p < 1.3$, $0 < q < 1$, $0 < r < 1$). For example, in the chemical formula 2, q and r are each independently in the range of 0.05 to 0.9, 0.1 to 0.8, or 0.1 to 0.3. More specifically, in the chemical formula 2, $1-q-r-s$ is in the range of 0.2 to 0.95, or in the range of 0.5 to 0.7.

The electrode for a secondary battery according to an aspect of the present disclosure is formed by simultaneously coating a lower and upper active material layer on a current collector by applying a simultaneous coating technology using a double layer slot die (DLD) device. Thus, the electrode has excellent electrode manufacturing efficiency and high loading amount can be realized.

The electrode for a secondary battery as described above is a structure having an active material layer formed on a current collector. In the present disclosure, the active material layer includes a lower active material layer and an upper active material layer. The content of the active material may be 85 parts by weight to 98 parts by weight, more specifically, 90 parts by weight to 98 parts by weight or 95 parts by weight to 98 parts by weight, relative to 100 parts by weight of the active material layer.

Further, the active material layer may further comprise, in addition to the active material, a conductive material, a binder, and/or a dispersant.

In this case, the conductive material is used to improve a performance such as electrical conductivity of the positive electrode. The needle-type conductive material may be a carbon fiber, a carbon nanofiber (CNT), or a pulverized thereof. The sphere-type conductive material may be at least one selected from carbon black, acetylene black, ketchen black, channel black, furnace black, lamp black, and thermal black. For example, the sphere-type conductive material may be carbon black, and the needle-type conductive material may comprise a carbon nanofiber (CNT).

Further, the content of the conductive material may be in a range of 0.1 parts by weight to 5 parts by weight, 0.2 parts by weight to 3 parts by weight, 0.3 parts by weight to 1.5 parts by weight, or 0.5 parts by weight to 1.2 parts by weight, relative to 100 parts by weight of the active material layer. By applying a carbon nanofiber (CNT) as the conductive material, the content of the conductive material can be reduced while maintaining the electrical conductivity.

Further, the binder may include one or more resins selected from the group consisting of polyvinylidenefluoride-hexafluoropropylene copolymer (PVDF-co-HFP), polyvinylidenefluoride, polyacrylonitrile, polymethylmethacrylate, and copolymers thereof. In one example, the binder may comprise polyvinylidenefluoride.

In addition, the binder may comprise from 1 part by weight to 10 parts by weight, more specifically from 2 parts by weight to 8 parts by weight; or from 2 parts by weight to 5 parts by weight, relative to the overall 100 parts by weight of the active material layer.

Meanwhile, as the current collector of the positive electrode for lithium secondary battery according to an aspect of the present disclosure, one having high conductivity can be used without causing chemical changes in the battery. For example, stainless steel, aluminum, nickel, titanium, calcined carbon, or the like can be used, and in the case of aluminum or stainless steel, a surface treated with carbon, nickel, titanium, silver, or the like can also be used. In addition, the current collector may be formed with fine unevenness on the surface to increase the adhesion of the positive electrode active material and may be in various forms such as a film, a sheet, a foil, a net, a porous body, a foam, a nonwoven body, and the like. In addition, the average thickness of the current collector may be appropriately applied from 3 $\mu$m to 500 $\mu$m, considering the conductivity and total thickness of the positive electrode to be manufactured.

## Secondary Battery

The present disclosure also provides, in one embodiment, a secondary battery comprising the above-described electrode for a secondary battery. Specifically, the present disclosure provides a secondary battery comprising the above-described electrode for a secondary battery as a positive electrode. The secondary battery may be a battery for an automotive or Energy Storage System (ESS). For example, the secondary battery is a lithium secondary battery.

A secondary battery according to an aspect of the present disclosure may comprise a positive electrode, a negative electrode and a separator positioned between the positive electrode and negative electrode.

The negative electrode may comprise a negative electrode current collector and a negative electrode active material layer located on the negative electrode current collector and containing a negative electrode active material. Specifically, the negative electrode is prepared by applying, drying, and pressing a negative electrode active material on the negative electrode current collector, and may optionally further include conductive materials as described above, organic binder polymers, fillers, and the like, as needed.

In addition, the negative electrode active material may comprise, for example, carbon and graphite materials such as graphite having a completely layered crystal structure, such as natural graphite, soft carbon having low crystallinity layered crystal structure (graphene structure; a structure in which hexagonal honeycomb-like planes of carbon are arranged in layers) and hard carbon having such a structure mixed with amorphous portions, artificial graphite, expanded graphite, carbon fiber, hard-graphitizing carbon, carbon black, carbon nanotubes, fullerene, activated carbon, etc., or $Li_xFe_2O_3(0 \leq x \leq 1)$, $Li_xWO_2(0 \leq x \leq 1)$, $Sn_xMe_{1-x}Me'_yO_z$ (Me: Mn, Fe, Pb, Ge; Me': Al, B, P, Si, elements of Groups 1, 2, and 3 of the periodic table; halogens; $0 < x \leq 1$; $1 \leq y \leq 3$; $1 \leq z \leq 8$) and other metal complex oxides; lithium metals; lithium alloys; silicon-based alloys; tin-based alloys; metal oxides such as $SnO$, $SnO_2$, $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, and, $Bi_2O_5$ etc.; conductive polymers such as polyacetylene, etc.; Li-Co-Ni based materials; titanium oxides; lithium titanium oxides, etc. can be used.

In one example, the negative electrode active material may comprise graphite and silicon (Si)-containing particles together, wherein the graphite may comprise any one or more of natural graphite having a layered crystal structure and artificial graphite having an isotropic structure, wherein the silicon (Si)-containing particles are particles comprising silicon (Si) as a metal component, and may include silicon (Si) particles, silicon oxide ($SiO_2$) particles, or a mixture of the silicon (Si) particles and silicon oxide ($SiO_2$) particles.

In this case, the negative electrode active material may comprise 80 parts by weight to 95 parts by weight of graphite; and 1 part by weight to 20 parts by weight of silicon (Si)-containing particles, with respect to the overall 100 parts by weight. The present disclosure can improve the charge capacity per unit mass while reducing lithium consumption and irreversible capacity loss during initial charge and discharge of the battery by adjusting the content of graphite and silicon (Si)-containing particles included in the negative electrode active material to the range as described above.

Further, the negative electrode active material layer may have an average thickness of 100 $\mu$m to 200 $\mu$m, and more specifically, may have an average thickness of 100 $\mu$m to 180 $\mu$m; 100 $\mu$m to 150 $\mu$m; 120 $\mu$m to 200 $\mu$m; 140 $\mu$m to 200 $\mu$m; or 140 $\mu$m to 160 $\mu$m.

Furthermore, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, a surface treated with carbon, nickel, titanium, silver, and the like can also be used.

In addition, the negative electrode current collector, as in the same manner as the positive electrode current collector, may be formed with fine unevenness on the surface to enhance coupling with the negative electrode active material, and may be in various forms such as a film, a sheet, a foil, a net, a porous body, a foam, a nonwoven body, and the like. In addition, the average thickness of the negative electrode current collector may be appropriately applied from 3 $\mu$m to 500 $\mu$m considering the conductivity and total thickness of the negative electrode to be manufactured.

In addition, the separator is interposed between the positive electrode and the negative electrode, and an insulating thin film having high ion permeability and mechanical strength is used. The separator is not particularly limited as long as it is conventionally used in the art, but in particular, a sheet or nonwoven fabric made of chemical-resistant and hydrophobic polypropylene; glass fiber; or polyethylene or the like may be used, and in some cases, a composite separator in which inorganic particles/organic particles are coated by an organic binder polymer on a porous polymer base material such as the sheet or nonwoven fabric may be used. When a solid electrolyte such as a polymer or the like is used as the electrolyte, the solid electrolyte may also serve as the separator. Furthermore, the pore diameter of the separator may be an average of 0.01 $\mu$m to 10 $\mu$m, and the thickness may be an average of 5 $\mu$m to 300 $\mu$m.

Meanwhile, the positive electrode and negative electrode may be rolled into a jellyroll form and accommodated in a cylindrical battery, prismatic battery, or pouch-type battery, or may be folded or stack-and-folded to be accommodated in a pouch-type battery, but are not limited thereto.

In addition, the lithium salt-containing electrolyte according to an aspect of the present disclosure may comprise an electrolyte and a lithium salt, and the electrolyte may comprise a non-aqueous organic solvent, an organic solid electrolyte, an inorganic solid electrolyte, and the like.

The non-aqueous organic solvents include, for example, N-methyl-2-pyrrolidinone, ethylene carbonate, propylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, and other non-polar organic solvents may be used.

The organic solid electrolyte may include, for example, polyethylene derivatives, polyethylene oxide derivatives, polypropylene oxide derivatives, phosphate ester polymers, polyalginate lysine, polyester sulfides, polyvinyl alcohols, polyvinylidene fluoride, polymers including ionic dissociating groups, and the like.

As the inorganic solid electrolyte, for example, nitrides, halides, sulfates, and the like of Li such as $Li_3N$, $LiI$, $Li_5Ni_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$, and the like may be used.

The lithium salt is a material that is soluble in a non-aqueous electrolyte, for example, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborane, lithium carbonate of low aliphatic, lithium 4-phenylboronic acid, lithium imides, and the like may be used.

In addition, the electrolyte may contain, for example, pyridine, triethylphosphite, triethanolamine, cyclic ether, ethylenediamine, N-glyme, hexamethyl phosphoric triamide, for the purpose of improving charge and discharge characteristics, flame retardancy, etc., nitrobenzene derivatives, sulfur, quinone imine dyes, N-substituted oxazolidinones, N,N-substituted imidazolidines, ethylene glycol dialkyl ethers, ammonium salts, pyrroles, 2-methoxyethanol, aluminum trichloride, and the like may also be added. In some cases, halogen-containing solvents such as carbon tetrachloride, ethylene trifluoride, and the like may be added to provide non-flammability, carbon dioxide gas may be added to improve high temperature preservation characteristics, and fluoro-ethylene carbonate (FEC), propene sultone (PRS), and the like may be added.

Meanwhile, the present disclosure provides, in one embodiment, a module including the secondary battery described above or a battery pack including the module.

The battery pack may be used as a power source for medium and large-sized devices requiring high temperature stability and long cycle characteristics and high rate characteristics, and specific examples of such medium and large-sized devices include a power tool powered by an electric motor; electric vehicles, including an electric vehicle (EV), a hybrid electric vehicle (HEV), a plug-in hybrid electric vehicle (PHEV), and the like; electric two-wheeled vehicles, including electric bikes (E-bikes), electric scooters (E-scooters); electric golf carts; electric power storage systems; and more specifically, hybrid electric vehicles (HEVs), but not limited thereto.

Further, the positive electrode, negative electrode, and separator may be wound in a jellyroll form to form a cylindrical battery or a prismatic battery. Alternatively, the positive electrode, negative electrode, and separator may form a stacked electrode assembly to form a pouch-type battery.

The lithium secondary battery including a positive electrode active material according to an aspect of the present disclosure as described above may be used in a battery module, or a battery pack, which includes a plurality of such unit batteries. In particular, it is useful in portable devices such as cell phones, notebook computers, digital cameras, and the like, and in the field of electric vehicles such as hybrid electric vehicles (HEVs).

## EXAMPLES

The present disclosure will now be described in more detail with the following examples and experimental examples.

However, the following examples and experimental examples are only exemplary of aspects of the present disclosure, and the present disclosure is not limited to the following examples and experimental examples.

### Example 1

Two types of positive electrode active materials (active material 1 (S20), active material 2 (PN6A08)), carbon nanotube (CNT) conductive material (LB.CNT), H-NBR dispersant (HPD-1), and PVDF binder (KF7200) were mixed in N-methylpyrrolidone solvent to prepare the lower slurry. The two types of positive electrode active materials were $LiFePO_4$ (active material 1, S20, hereinafter referred to as LFP) and $LiNi_{0.65}Co_{0.15}Mn_{0.2}O_2$ (active material 2, PN6A08, hereinafter referred to as NCM).

Then, the positive electrode active material (active material 1 (S20)), carbon black conductive material (LiS04), H-NBR dispersant (HPD-1), and PVDF binder (KF7200) were mixed in N-methylpyrrolidone solvent to prepare the upper slurry. As the positive electrode active material, $LiFePO_4$ (active material 1, S20) was used.

The lower and upper slurries were applied using a DLD device on an aluminum current collector, and then drying and rolling were performed to manufacture a two-layer structure positive electrode. The lower slurry loading amount was controlled at a level of 360 mg/25cm$^2$, based on solids. The upper slurry loading amount was controlled at a level of 140 mg/25cm$^2$, based on solids. The positive electrode was then dried and rolled to manufacture a positive electrode with a porosity of 26% (v/v).

The detailed composition of the electrode slurry according to layer is shown in the following Table 1, wherein the composition and content are described based on weight, and the porosity is described based on volume.

[Table 1]

| Classification | | Composition | Content (wt.%) |
|---|---|---|---|
| Upper active material layer | Active material 1 | LFP (100%) | 95.96 |
| | Active material 2 | - | |
| | Conductive material | Carbon black | 0.8 |
| | Dispersant | HPD-01 | 0.24 |
| | Binder | PVDF | 3 |
| Lower active material layer | Active material 1 | LFP (40%) | 95.96 |
| | Active material 2 | NCM (60%) | |
| | Conductive material | CNT | 0.8 |
| | Dispersant | HPD-01 | 0.24 |
| | Binder | PVDF | 3 |
| Current collector | | 15 $\mu$m Al A grade | - |
| Porosity (%) | | 26 | - |

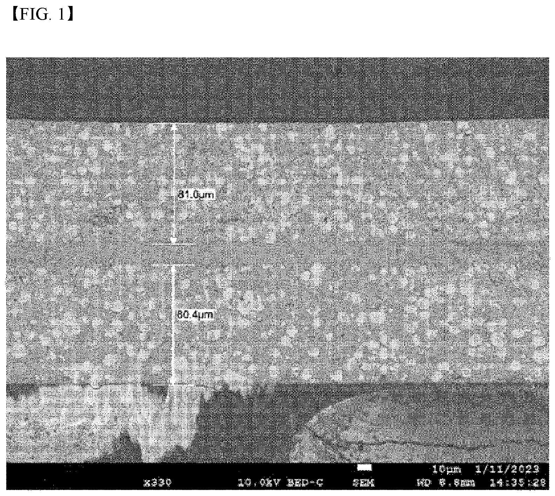

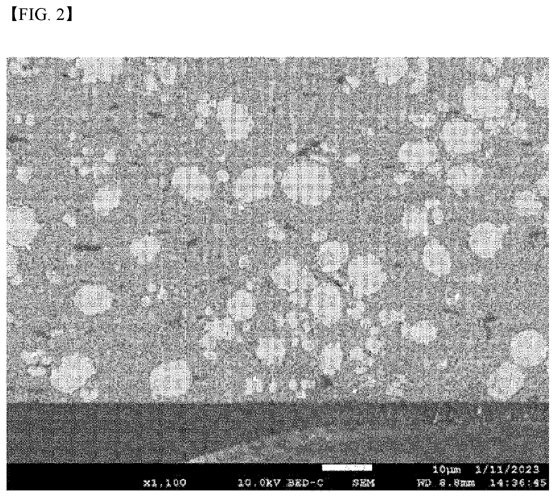

A cross-sectional structure of a positive electrode manufactured according to the present example is shown in FIG. 1, and FIG. 2 is an enlarged view thereof.

### Example 2

The positive electrode was manufactured by the same process as in Example 1, except that the loading amount of the lower active material layer was 400 mg/25cm$^2$ and the loading amount of the upper active material layer was 180 mg/25cm$^2$.

### Example 3

The positive electrode was manufactured by the same process as in Example 1, except that the conductive

EP 4 576 248 A1

material included in the lower active material layer was a mixture of CNT and carbon black in a 45:55 weight ratio.

**Comparative Example 1**

Two kinds of positive electrode active materials (active materials 1 (S20), 2 (PN6A08)), carbon nanotube (CNT) conductive material (LB.CNT), H-NBR dispersant (HPD-1) and PVDF binder (KF7200) were mixed in N-methylpyrrolidone solvent to prepare the electrode slurry. The two types of positive electrode active materials were $LiFePO_4$ (active material 1, S20) and $LiNi_{0.65}Co_{0.15}Mn_{0.2}O_2$ (active material 2, PN6A08).

After applying the electrode slurry on an aluminum current collector at a loading amount of 500 mg/25cm$^2$ based on solids, drying and rolling, a positive electrode with a single-layer structure was prepared. The porosity was controlled to 26% (v/v) by adjusting the degree of rolling. The detailed composition of the electrode slurry is shown in the following Table 2. In Table 2, the composition and content are described based on weight, and the porosity is described based on volume.

[Table 2]

| Classification | | Composition | Content (wt.%) |
|---|---|---|---|
| Active material layer | Active material 1 | LFP (40%) | 95.96 |
| | Active material 2 | NCM (60%) | |
| | Conductive material | CNT | 0.8 |
| | Dispersant | HPD-01 | 0.24 |
| | Binder | PVDF | 3 |
| Current collector | | 15 $\mu$m Al A grade | - |
| Porosity (%) | | 26 | - |

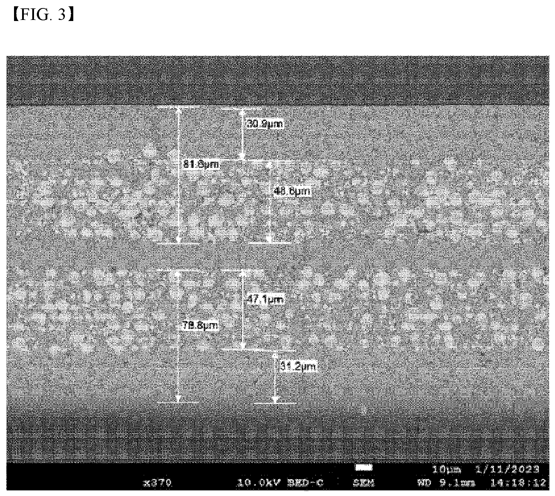

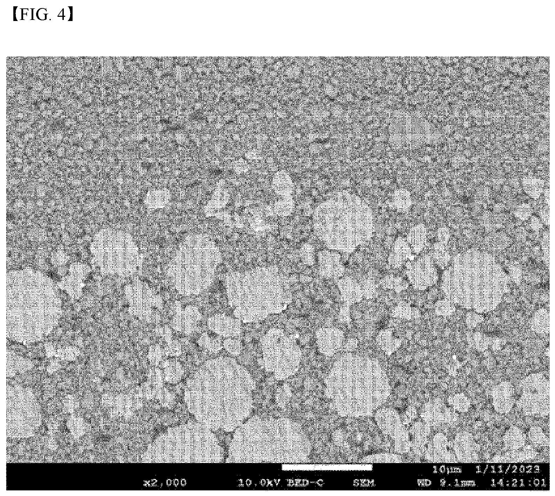

A cross-sectional structure of a positive electrode manufactured according to the present comparative example 1 is shown in FIG. 3, and FIG. 4 is an enlarged view thereof.

**Comparative Example 2**

The positive electrode was manufactured by the same process as in Example 1, except that CNT was used as the conductive material in the upper active material layer.

**Comparative Example 3**

The positive electrode was prepared by the same process as in Comparative Example 1, except that LFP was used alone as the active material.

**Experimental Example 1: Thermal Stability Evaluation**

A secondary battery was manufactured using the positive electrode manufactured in Example 1 and Comparative Example 1.

Specifically, the positive electrode manufactured in Example 1 and Comparative Example 1, respectively, was used.

For the negative electrode, a negative electrode slurry was prepared by mixing natural graphite, a conductive material, a binder, and a dispersant in a 95.86:0.8:2.3:1.03 weight ratio in a water solvent. After applying the negative electrode slurry on a copper current collector, drying and rolling were conducted to manufacture the negative electrode. The porosity was controlled to 29% (v/v) by adjusting the degree of rolling. The detailed composition of the negative electrode slurry is described in the following Table 3. In Table 3, the composition and content are described based on weight, and the porosity is described based on volume.

[Table 3]

| Classification | | Composition | Content (wt.%) |
|---|---|---|---|
| Negative | Active material 1 | Graphite | 95.86 |

(continued)

| Classification | | Composition | Content (wt.%) |
|---|---|---|---|
| electrode Active material layer | Conductive material 1 | Carbon black (98.13%) | 0.8 |
| | Conductive material 2 | CNT (1.88%) | |
| | Binder | SBR | 2.3 |
| | Dispersant 1 | Daiciel2200 | 1.03 |
| Current collector | | 8 $\mu$m Cu B grade | - |
| Porosity (%) | | 29 | - |

An electrode assembly was manufactured by interposing a separator between the manufactured positive electrode and negative electrode. The stacked number of the electrode assembly was 33+1. The manufactured electrode assembly was positioned inside an aluminum pouch case, and the secondary battery was manufactured by injecting electrolyte into the case. The manufactured secondary battery is a medium and large-sized lithium secondary battery with an overall width of 111.1 mm and an overall length of 301.5 mm.

The electrolyte was prepared by dissolving lithium hexafluorophosphate($LiPF_6$) at a concentration of 1.0 M in an organic solvent containing a mixture of ethylene carbonate/ethylmethylcarbonate/dimethylcarbonate (EC/EMC/DEC) in a volume ratio of 30/40/30.

The manufactured secondary battery was charged at 25°C, CCCV mode, with 0.05C until it reached 4.2V. While in the charged state, a thermal transition test was performed. The thermal transfer speed and shutdown speed were measured through the thermal transition test.

Specifically, three secondary batteries were stacked for the thermal transition test, and a heat film was attached to the #1 secondary battery for direct heat transfer. To prevent external heat from entering, the three stacked secondary batteries and the heat film were packaged in a heat-resistant module. The heat film attached to the #1 secondary battery was heated at 20°C speed per minute.

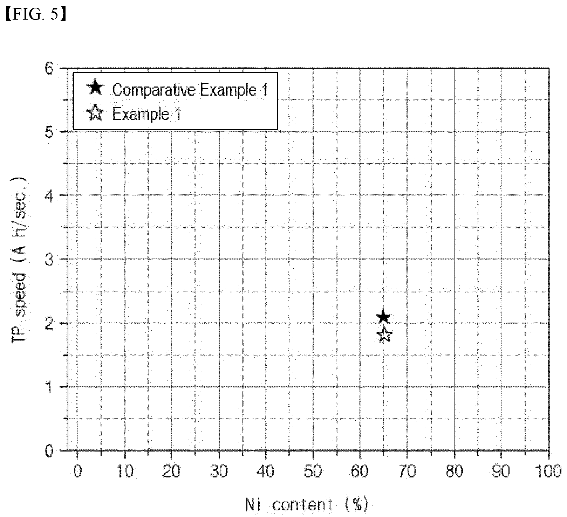

From the ignition time of the #1 secondary battery to the ignition time of the #2 to #3 secondary batteries, the thermal transition time (TP time) was measured. This result was used to calculate the shut down speed (TP speed). Each test was performed twice, and the results are shown in the following Table 4 and FIG. 5.

[Table 4]

| Classification | TP time (sec) | TP speed (Ah/sec) |
|---|---|---|
| Example 1 #1 set | 83 | 1.84 |
| Example 1 #2 set | 83.7 | 1.83 |
| Comparative Example 1 #1 set | 72 | 2.12 |
| Comparative Example 1 #2 set | 73 | 2.06 |

Referring to the results in Table 4 and FIG. 5, it can be observed that the thermal transition time (TP time) is longer, and the shutdown speed (TP speed) is significantly reduced in the case of the example compared to the Comparative Example. Thus, it can be understood that the electrode according to aspects of the present disclosure has a significantly excellent thermal safety when applied to a secondary battery.

**Experimental Example 2: Capacity Retention Rate Evaluation**

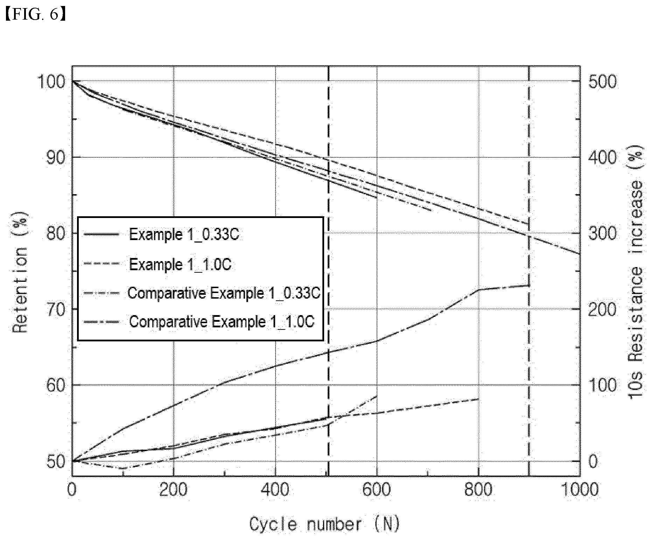

A secondary battery was manufactured using the positive electrode manufactured in Example 1 and Comparative Example 1. The secondary battery manufacturing process is the same as in Experimental Example 1. Charge and discharge were performed at 0.33C and 1.0C conditions for each secondary battery, and the capacity retention rate was measured. The results are shown in the following Table 5 and FIG. 6.

[Table 5]

| Classification | C-rate | Number of cycles (N) | Capacity retention rate (%) |
|---|---|---|---|
| Example 1 | 0.33 | 500 | 87.41 |

(continued)

| Classification | C-rate | Number of cycles (N) | Capacity retention rate (%) |
|---|---|---|---|
| Example 1 | 1.0 | 500 | 90.13 |
| Example 1 | 1.0 | 900 | 81.46 |
| Comparative Example 1 | 0.33 | 500 | 87.75 |
| Comparative Example 1 | 1.0 | 500 | 88.64 |
| Comparative Example 1 | 1.0 | 900 | 80.14 |

Referring to Table 5 and FIG. 6, the capacity retention rate of the secondary battery with the positive electrode according to Example 1 at the 0.33C condition was found to be in equivalent level as the secondary battery with the positive electrode according to the Comparative Example 1.

In this regard, it can be noted that the capacity retention rate of the secondary battery with the positive electrode according to Example 1 at the 1.0C condition is better than compared to the secondary battery with the positive electrode according to the Comparative Example 1. Specifically, at the point after 500 cycles at the 1.0C condition, the secondary battery with the positive electrode according to the Example 1 shows a capacity retention rate of 90.13%, while the secondary battery with the positive electrode according to the Comparative Example 1 shows a capacity retention rate of 88.64%.

**Experimental Example 3: High Temperature Storage Characteristics Evaluation**

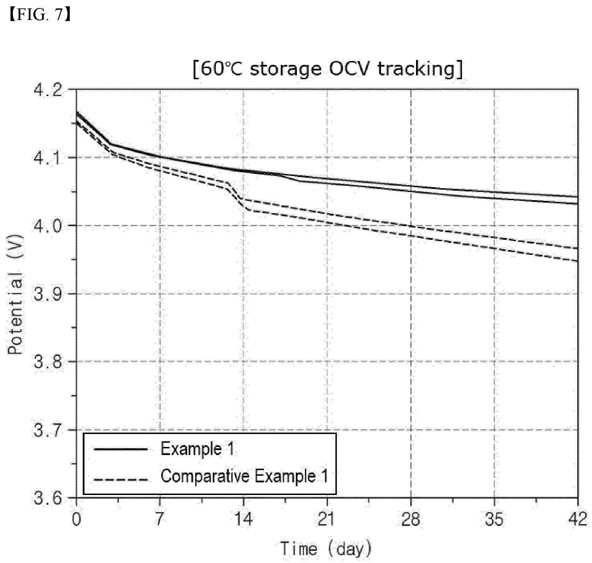

Secondary batteries were manufactured using the positive electrode manufactured in Example 1 and Comparative Example 1. The secondary battery manufacturing process is the same as in Experimental Example 1. The manufactured secondary batteries were charged at 25°C, CCCV mode, with 0.05C until 4.2V. In the charged state, each secondary battery was stored at 60°C and the OCV change was measured. The results are shown in the following Table 6 and FIG. 7. For each secondary battery, two replicate measurements were performed, and the average values are shown in the following Table 6.

[Table 6]

| OCV (V) after 60°C Storage | Comparative Example 1 | Example 1 |
|---|---|---|
| +1 day | 4.151 | 4.165 |
| +7 days | 4.059 | 4.092 |
| +14 days | 4.015 | 4.066 |
| +21 days | 3.995 | 4.055 |
| +28 days | 3.977 | 4.046 |
| +35 days | 3.960 | 4.038 |
| +42 days | 3.955(37 days) | 4.031 |

Referring to Table 6 and FIG. 7, it can be observed that the secondary battery with the positive electrode according to Example 1 shows a gradual decrease in OCV. In contrast, the secondary battery with the positive electrode according to the Comparative Example 1 shows a sharp decrease in OCV at a point after about 13 days, followed by a larger decrease in OCV thereafter.

**Experimental Example 4: Low Temperature Discharge Characteristic Evaluation**

Secondary batteries were manufactured using the positive electrodes manufactured in Examples 1, 3 and Comparative Example 1. The secondary battery manufacturing process is the same as in Experimental Example 1. The manufactured secondary batteries were charged at 25°C, CCCV mode, with 0.05C until 4.2V. In the charged state, each secondary battery was evaluated for discharge rate characteristics at a temperature of -7°C. The results are shown in the following Table 7, which shows the relative proportion to the results evaluated at 25°C.

[Table 7]

| Capacity retention rate (%, vs. 25°C capacity) | Comparative Example 1 | Example 1 | Example 3 |
|---|---|---|---|
| 0.33C | 66.5 | 64.4 | 66.2 |
| 0.5C | 63.7 | 61.7 | 62.8 |
| 1.0C | 62.8 | 60.5 | 61.5 |
| 1.5C | 64.0 | 62.6 | 63.8 |
| 2.0C | 51.1 | 64.5 | 60.5 |

Referring to Table 7, the secondary battery with the positive electrode according to Example 1 has excellent physical properties at high-rate conditions (2.0C). The secondary battery applying the positive electrode according to Example 3 realizes even physical properties in both low-rate and high-rate conditions. In contrast, it can be noted that the secondary battery applying the positive electrode according to Comparative Example 1 has a sharp degradation of the physical properties at high-rate conditions (2.0C).

**Experimental Example 5: Battery Resistance Analysis**

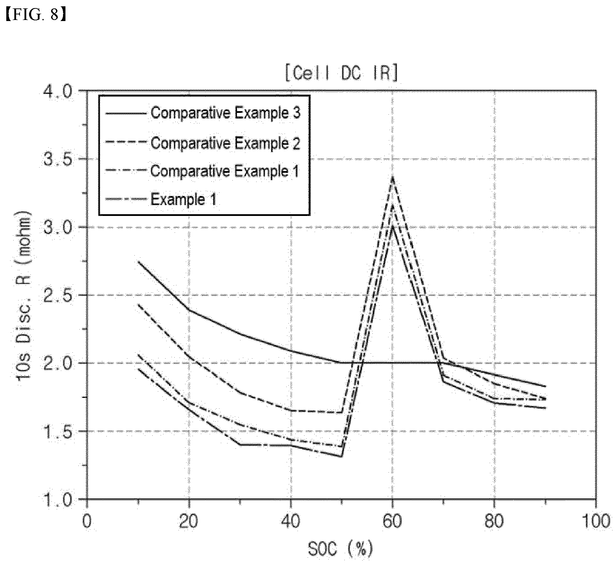

Secondary batteries were manufactured using the positive electrodes manufactured in Example 1 and Comparative Examples 1 to 3. The secondary battery manufacturing process is the same as in Experimental Example 1. For the manufactured secondary batteries, the direct current internal resistance (DCIR) by SOC was measured according to the ISO 12405-2 standard method. The measurement results are shown in the following Table 8 and FIG. 8.

[Table 8]

| SOC (%) | Cell DCIR (mOhm) | | | |
|---|---|---|---|---|
| | Comparative Example 1 | Comparative Example 2 | Example 1 | Comparative Example 3 |
| 90 | 1.73 | 1.73 | 1.67 | 1.84 |
| 80 | 1.74 | 1.85 | 1.71 | 1.92 |
| 70 | 1.90 | 2.01 | 1.86 | 1.99 |
| 60 | 3.18 | 3.37 | 3.02 | 1.99 |
| 50 | 1.39 | 1.63 | 1.32 | 2.00 |
| 40 | 1.44 | 1.65 | 1.39 | 2.09 |
| 30 | 1.55 | 1.79 | 1.40 | 2.20 |
| 20 | 1.71 | 2.03 | 1.66 | 2.38 |
| 10 | 2.06 | 2.42 | 1.95 | 2.74 |

Referring to Table 8 and FIG. 8, it can be observed that the secondary battery with the positive electrode according to Example 1 shows a lower resistance throughout the SOC entire section compared to the secondary battery with the positive electrode according to Comparative Examples 1 and 2. In particular, the secondary battery with the positive electrode according to Comparative Examples 1 and 2 shows a sharp rise in resistance at the SOC 60% point, whereas the secondary battery with the positive electrode according to Example 1 shows a relatively low rise in resistance at the same point.

In the secondary battery applying the positive electrode according to the Comparative Example 3, a sharp change in resistance is not observed at the SOC 60% point, but an overall high resistance value is observed.

**Experimental Example 6: Electrode Adhesion Evaluation**

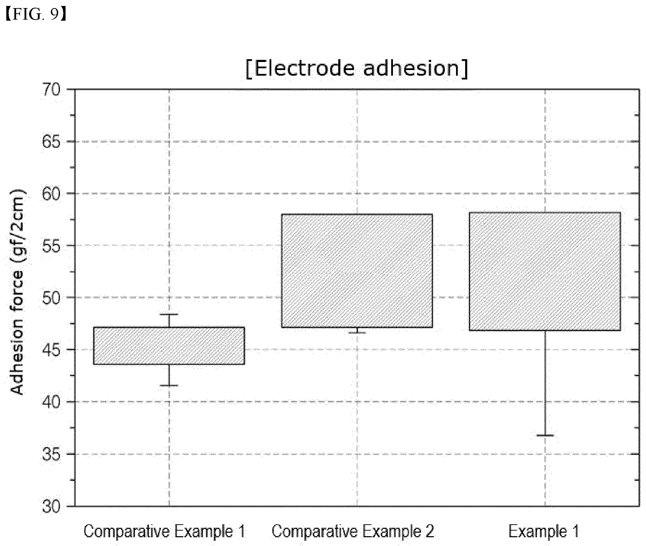

The adhesion was evaluated for the positive electrodes manufactured in Example 1, Comparative Examples 1 and 2. The electrode adhesion evaluation was performed at a temperature of 25°C, and an adhesive tape was attached to the electrode active material layer while the current collector was fixed, and then the adhesive tape was pulled vertically. At the point where the current collector and the electrode active material layer were peeled off by 2 cm, the applied force was recorded. The evaluation results are shown in the following Table 9 and FIG. 9.

[Table 9]

| Classification | Comparative Example 1 | Comparative Example 2 | Example 1 |
|---|---|---|---|
| Adhesion (gf/2cm) | 45.0806 | 52.42 | 52.48 |

Referring to the results of Table 9 and FIG. 9, it was found that Example 1 showed the highest electrode adhesion. The electrode adhesion shown in example 1 was found to be about 16.4% higher compared to Comparative Example 1.

**Experimental Example 7: Electrode Resistance Evaluation**

Electrode resistance was measured for the positive electrodes manufactured in Example 1, Comparative Examples 1 and 2. The electrode resistance was evaluated by separating the interface resistance (Interface) between the current collector and the active material layer and the active material layer resistance (Active material).

The interface resistance was measured by cutting the manufactured positive electrode into 1 cm x 1 cm specimens. For each manufactured specimen, the resistance was measured with the resistance probe in contact with the current collector and active material layer, respectively.

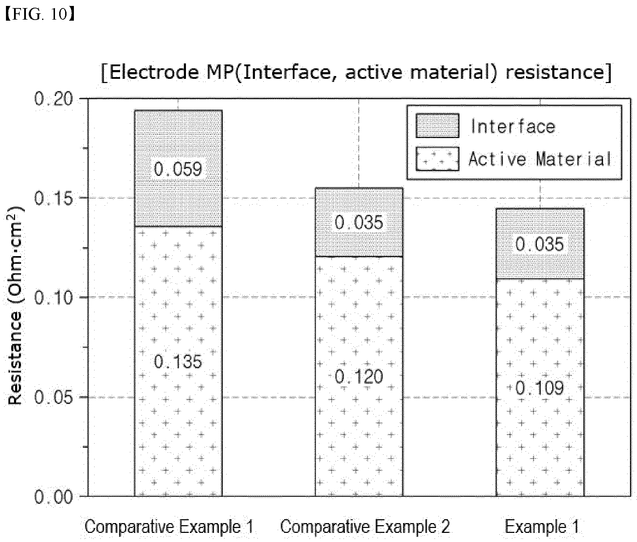

The active material layer resistance was measured by peeling off the active material layer from the current collector and cutting the peeled off active material layer into 1 cm x 1 cm specimens. For each manufactured specimen, the resistance was measured by contacting the resistance probe to both ends of the active material layer. The evaluation results are shown in the following Table 10 and FIG. 10.

[Table 10]

| Classification | Comparative Example 1 | Comparative Example 2 | Example 1 |
|---|---|---|---|
| Electrode resistance (Interface, $\Omega \cdot cm^2$) | 0.059 | 0.035 | 0.035 |
| Electrode resistance (Active material, $\Omega \cdot cm^2$) | 0.135 | 0.120 | 0.109 |

Referring to the results of Table 10 and FIG. 10, it is found that Example 1 shows the lowest resistance. The electrode resistance shown in Example 1 is observed to be about 40% or more lower in interface resistance (Interface) and about 20% lower in active material layer resistance (Active material) compared to Comparative Example 1. In addition, the electrode resistance shown in Example 1 is found to have an equivalent level of interface resistance (Interface) but about 9% lower active material layer resistance (Active material) compared to Comparative Example 2.

As above, the present disclosure has been described with reference to preferred aspects of the present disclosure, but it will be understood by those skilled in the art or having ordinary knowledge in the art that various modifications and changes can be made to the present disclosure without departing from the scope of the spirit and technical field of the present disclosure as described in the following patent claims.

Thus, the technical scope of the present disclosure is not limited to what is described in the detailed description of the specification, but should be determined by the claims of the patent.

**Claims**

1.    An electrode for a secondary battery, comprising:

a current collector;
a lower active material layer formed on one side or on two sides of the current collector, and comprising an active material of the lower active material layer that comprises a first lithium iron phosphate active material and a lithium nickel oxide active material, and a conductive material of the lower active material layer that comprises a needle-type conductive material; and
an upper active material layer formed on the lower active material layer, and comprising an active material of the upper active material layer that comprises a second lithium iron phosphate active material, and a conductive material of the upper active material layer that comprises a sphere-type conductive material, wherein:

a ratio of a content of a sum of the first lithium iron phosphate material and the second lithium iron phosphate active material to a content of the lithium nickel oxide active material is in a weight ratio range of from 55 to 70:30 to 45; and
a total average loading amount of the lower active material layer and the upper active material layer is in a range of from 300 mg/25cm$^2$ to 900 mg/25cm$^2$.

2. The electrode for secondary battery of claim 1, wherein the conductive material of the upper active material layer comprises only sphere-type conductive material,
or the conductive material of the upper active material layer comprises 90 wt.% or more of sphere-type conductive material and a remainder of needle-type conductive material.

3. The electrode for secondary battery of claim 1, wherein the conductive material of the upper active material layer comprises only sphere-type conductive material, or the conductive material of the upper active material layer comprises 90 wt.% or more of sphere-type conductive material and a remainder of needle-type conductive material, and
wherein the conductive material of the lower active material layer comprises a mixture of sphere-type conductive material and needle-type conductive material in a weight ratio of from 30 to 60:40 to 70.

4. The electrode for secondary battery of claim 1, wherein:

the total average loading amount of the lower active material layer and the upper active material layer is in a range of from 400 mg/25cm$^2$ to 700 mg/25cm$^2$; and
the electrode satisfies that a value calculated by a following condition 1 is 0.45 or less:

$$D_{Top}/D_{Bottom} \ (1),$$

wherein
$D_{Top}$ is an average loading amount (mg/25cm$^2$) of the upper active material layer, and
$D_{Bottom}$ is an average loading amount (mg/25cm$^2$) of the lower active material layer.

5. The electrode for secondary battery of claim 4, wherein the average loading amount of the lower active material layer is in a range of from 300 mg/25cm$^2$ to 450 mg/25cm$^2$.

6. The electrode for secondary battery of claim 1, wherein a ratio of a content of the first lithium iron phosphate active material to a content of the second lithium iron phosphate active material is in a weight ratio range of from 40 to 60:40 to 60.

7. The electrode for secondary battery of claim 1, wherein in the lower active material layer, a ratio of a content of the first lithium iron phosphate active material to a content of the lithium nickel oxide active material is in a weight ratio range of from 35 to 48:52 to 65.

8. The electrode for secondary battery of claim 1, wherein a total average porosity of the lower active material layer and the upper active material layer is in a range of from 22% to 28%.

9. The electrode for secondary battery of claim 1, wherein the first lithium iron phosphate active material and the second lithium iron phosphate active material are each independently represented by a following chemical formula 1:

$$Li_{1+a}Fe_{1-b}M^1{}_bPO_{4-c}X_c \qquad (1),$$

wherein:

$M^1$ comprises one or more or two or more of Al, Mg, Ni, Co, Mn, Ti, Ga, Cu, V, Nb, Zr, Ce, In, Zn, or Y;
X comprises one or more or two or more of F, S or N; and
$-0.5 \leq a \leq 0.5$, $0 \leq b \leq 0.9$, and $0 \leq c \leq 0.8$.

10. The electrode for secondary battery of claim 9, wherein the first lithium iron phosphate material and the second lithium iron phosphate active material each independently comprise a carbon coating layer.

11. The electrode for secondary battery of claim 1, wherein the lithium nickel oxide active material is represented by a following chemical formula 2:

$$Li_pNi_{1-q-r-s}Co_qMn_rM^2{}_sO_2 \qquad (2),$$

wherein:

M$^2$ is one or more elements selected from the group consisting of Al, Zr, Ti, Mg, Ta, Nb, Mo, and Cr; and $0.9 \leq p \leq 1.5$, $0 \leq q \leq 1$, $0 \leq r \leq 0.5$, $0 \leq s \leq 0.1$, and $0 \leq q+r+s \leq 1$.

12. The electrode for secondary battery of claim 11, wherein in the chemical formula 2, 1-q-r-s is in a range of from 0.2 to 0.95.

13. A secondary battery comprising the electrode according to claim 1.

14. The secondary battery of claim 13, wherein the secondary battery is a pouch-type battery.

15. The secondary battery of claim 13, wherein the secondary battery is a cylindrical or prismatic battery.

【FIG. 1】

【FIG. 2】

【FIG. 3】

【FIG. 4】

【FIG. 5】

【FIG. 6】

【FIG. 7】

[60°C storage OCV tracking]

【FIG. 8】

[Cell DC IR]

【FIG. 9】

[Electrode adhesion]

【FIG. 10】

[Electrode MP(Interface, active material) resistance]

## INTERNATIONAL SEARCH REPORT

| International application No. |
|---|
| **PCT/KR2024/008859** |

### A. CLASSIFICATION OF SUBJECT MATTER

**H01M 4/136**(2010.01)i; **H01M 4/131**(2010.01)i; **H01M 4/62**(2006.01)i; **H01M 4/58**(2010.01)i; **H01M 4/525**(2010.01)i; **H01M 4/505**(2010.01)i; **H01M 10/052**(2010.01)i; **H01M 4/36**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/136(2010.01); H01M 10/42(2006.01); H01M 10/654(2014.01); H01M 4/04(2006.01); H01M 4/36(2006.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이중층 (double layer), 활물질 (active material), 전극 (electrode), 리튬인산철 (lithium iron phosphate, LFP), 리튬니켈산화물 (lithium nickel oxide, LNO), 선형 도전재 (linear conductive materials), 점형 도전재 (dot conductive materials)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0012755 A (LG CHEM, LTD.) 03 February 2021 (2021-02-03)<br>See abstract; paragraphs [0051], [0055], [0056], [0058]-[0060], [0115]-[0118] and [0144]; and figure 1. | 1-15 |
| Y | JP 2013-065453 A (NEC CORP.) 11 April 2013 (2013-04-11)<br>See abstract; and paragraphs [0014], [0017], [0032]-[0034], [0039]-[0041], [0056] and [0061]. | 1-15 |
| A | JP 2015-109264 A (SEMICONDUCTOR ENERGY LAB CO., LTD.) 11 June 2015 (2015-06-11)<br>See abstract; paragraphs [0016]-[0018], [0069], [0072], [0076], [0077], [0079], [0080], [0095], [0098] and [0109]; and figure 1. | 1-15 |
| A | KR 10-2017-0042679 A (TOYOTA JIDOSHA KABUSHIKI KAISHA) 19 April 2017 (2017-04-19)<br>See abstract; paragraphs [0018], [0019], [0033] and [0034]; claims 1 and 2; and figures 2 and 3. | 1-15 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 September 2024** | **02 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/008859** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0006054 A (LG CHEM, LTD.) 17 January 2018 (2018-01-17)<br>See abstract; and claims 1-13. | 1-15 |

Form PCT/ISA/210 (second sheet) (July 2022)

## INTERNATIONAL SEARCH REPORT
### Information on patent family members

| International application No. |
| --- |
| **PCT/KR2024/008859** |

| Patent document cited in search report | | | Publication date (day/month/year) | Patent family member(s) | | | Publication date (day/month/year) |
| --- | --- | --- | --- | --- | --- | --- | --- |
| KR | 10-2021-0012755 | A | 03 February 2021 | CN | 112689915 | A | 20 April 2021 |
| | | | | CN | 112689915 | B | 27 February 2024 |
| | | | | EP | 3836254 | A1 | 16 June 2021 |
| | | | | EP | 3836254 | B1 | 17 April 2024 |
| | | | | EP | 4358194 | A2 | 24 April 2024 |
| | | | | EP | 4358194 | A3 | 24 July 2024 |
| | | | | KR | 10-2537264 | B1 | 30 May 2023 |
| | | | | PL | 3836254 | T3 | 10 June 2024 |
| | | | | US | 2021-0359294 | A1 | 18 November 2021 |
| | | | | WO | 2021-020844 | A1 | 04 February 2021 |
| JP | 2013-065453 | A | 11 April 2013 | None | | | |
| JP | 2015-109264 | A | 11 June 2015 | JP | 2019-186216 | A | 24 October 2019 |
| | | | | JP | 2021-153064 | A | 30 September 2021 |
| | | | | JP | 2022-180470 | A | 06 December 2022 |
| | | | | JP | 2024-088671 | A | 02 July 2024 |
| | | | | JP | 6586269 | B2 | 02 October 2019 |
| | | | | JP | 6901521 | B2 | 14 July 2021 |
| | | | | JP | 7145286 | B2 | 30 September 2022 |
| | | | | JP | 7463462 | B2 | 08 April 2024 |
| | | | | US | 2015-0111101 | A1 | 23 April 2015 |
| | | | | US | 2021-0313555 | A1 | 07 October 2021 |
| KR | 10-2017-0042679 | A | 19 April 2017 | CN | 106716688 | A | 24 May 2017 |
| | | | | CN | 106716688 | B | 09 March 2021 |
| | | | | JP | 2016-058309 | A | 21 April 2016 |
| | | | | JP | 6237546 | B2 | 29 November 2017 |
| | | | | KR | 10-1898104 | B1 | 12 September 2018 |
| | | | | US | 10651460 | B2 | 12 May 2020 |
| | | | | US | 2017-0256788 | A1 | 07 September 2017 |
| | | | | WO | 2016-038440 | A1 | 17 March 2016 |
| KR | 10-2018-0006054 | A | 17 January 2018 | KR | 10-2161591 | B1 | 05 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230087746
- KR 1020240062275